# EUROPEAN PATENT APPLICATION

(11) **EP 1 870 149 A1**
(43) Date of publication of application: **26.12.2007**
(21) Application number: 05730414.9
(22) Date of filing: 13.04.2005
(51) Int. Cl.: B01D 36/02, B01D 33/06, C02F 1/52, C02F 9/00

(54) **APPARATUS FOR WATER FILTRATION/PURIFICATION AND METHOD THEREOF**

(71) Applicant: HITACHI, LTD., Chiyoda-ku Tokyo 100-8280 (JP)
(72) Inventor: SAHO, Norihide, c/o Mechanical Eng. Res. Lab., Hitachinaka-shi, Ibaraki 312-0034 (JP); ISOGAMI, Hisashi, c/o Mechanical Eng. Res. Lab., Hitachinaka-shi, Ibaraki 312-0034 (JP); MIZUMORI, Takashi, c/o Mechanical Eng. Res. Lab., Hitachinaka-shi, Ibaraki 312-0034 (JP); TANAKA, Tetsuya, c/o Mechanical Eng. Res. Lab., Hitachinaka-shi, Ibaraki 312-0034 (JP)
(74) Representative: Hackney, Nigel John
(86) International application number: PCT/JP2005/007129
(87) International publication number: WO 2006/112007

(57) **Abstract**

For providing a water filtration purifying apparatus and a method thereof, enabling to reduce the manufacturing costs of the apparatus as a whole, by combining a function of filtration and a function of separation/concentration, the filtration function and the separation/concentration are separated, in the structure thereof. Thus, since all sewage waters generated in respective filtration separators can be collected by only one (1) set of a magnetic separator, even if there are plural number of the filtration separators, it is possible to dissolve a problem of rising up the costs of the apparatus, as a whole. With this, it is possible to provide a water filtration purifying apparatus, for enabling high water-quality purification and also reducing low manufacturing costs thereof, by further small-sizing the magnetic separating portion.

## Description

### TECHNICAL FIELD

The present invention relates to a filtration apparatus of water for purification thereof and a method thereof, with aiming the purification of water pollution, and/or separation between solid and liquid (solid/liquid separation), etc., and in particular, it relates to the water filtration purifying apparatus and the method thereof, for achieving the above without causing a great increase on costs of the apparatus, even in case when it is applied for treating a liquid to be processed, such as, a large amount of water or the like, for example, by combining a filtering portion for filtering material to be separated (or, removed), such as, a solid matter or the like, and a separating portion for separating the material to be separated, which is separated and concentrated through said the filtration.

### BACKGROUND ARTS

For the purpose of purification of water pollution and/or solid/liquid separation, etc., there is already known a magnetic membrane separator apparatus, for obtaining a purified water through filtration/separation of magnetic flocks, which are produced by adding a coagulant and magnetic power into raw water containing pollution particles therein, i.e., the material to be separated, with using a fine metal-wire net or a net knitted with polymer fiber, as a water permeating separation filter, for example, in the following Japanese Patent Document 1. However, in this conventional art, the magnetic flocks collected by the filter are magnetically separated, to be removed therefrom, by a magnetic field generating means, which is provided in a downstream, and they can be collected as sludge of high-density.

In more details, within the filtration-separation purifying apparatus shown in this Patent Document 1, the net is made of a fine-line of stainless steel or polyester fiber, etc., and it has a filter separation portion having an opening of an aperture or mesh size of several tens micrometers. For separating the fine polluting material, being smaller than a projected area or a projected diameter of the opening portion, the coagulant, such as, aluminium sulfate, poly aluminum chloride or poly ferric sulfate, for example, is added into the raw water, together with the magnetic powder, to be agitated or stirred, thereby producing the magnetic flocks, combining fine or minute floating solid material, algae, fungi, microorganisms within the raw water, glowing up to a largeness of approximately several hundreds micrometer. Those magnetic flocks cannot pass through the opening having the mesh size of several tens micrometers, and then they are captured and separated, at a high removal ratio, while the water passing through the filter comes to be purified water, being further high in water-quality thereof.

And, on the other hand, with the magnetic flocks caught on that filter mentioned above, after being washed away from the filter by claning water, the magnetic flocks staying in the vicinity of water surface is magnetically separated through magnetic force of a magnet, which is statically disposed in the vicinity of that water surface, to be transferred into a sludge collecting tank by a sludge transferring means, and thereby being removed. Thereafter, in general, this sludge is transported to a place for disposal or a place for burning thereof, or it is used as compost.

Patent Document 1: Japanese Patent Laying-Open No. 2002-273261 (2002).

### DISCLOSURE OF THE INVENTION

### PROBLEM(S) TO BE DISSOLVED BY THE INVENTION

However, with the conventional art explained in the above, it causes a problem of increasing the costs of the apparatus, in particular, when trying to deal with a large amount of water while setting up that apparatus in an actual disposal facility. This is because of such the stricture that, after filtration/separation of the magnetic flocks produced by the filter, the magnetic flocks collected on this filter is washed down from the filter with using cleaning water, and the magnetic flocks flowing down from the filtration filter with this cleaning water is magnetically separated and collected in the vicinity of the water surface of the water falling down. Thus, from the mentioned above, there is necessity of a long magnet for generating a long magnetic field in length thereof, being same to width of the filter, and further necessity of providing the filtering portion and the magnetic separation portion neighboring to each other within one (1) water tank.

For this reason, in case when treating a large amount of raw water, there is necessary of further widening the area of the filter for use of filtration, therefore it is necessary to enlarge the diameter of a rotating filter drum, and further to elongate the length of the rotating drum in the direction of a central line of rotation.

Also, in case where it is necessary to process an amount or volume of water, exceeding the volume that can be treated by one (1) set of the purifying apparatus, a plural number of purifying apparatuses are provided, and thereby purifying the raw water. In this case, the filter filtration portion and the magnetic separation portion must be provided in a pair, respectively. For that reason, it also increases the costs of the apparatus. Also, as was mentioned in the above, if elongating the length of the rotating drum of the filtration/separation portion, there is necessity of a long magnet fitting to an axial length of the rotary drum, thereby increasing the costs of the apparatus.

In addition thereto, the magnetic force acting upon the magnetic flocks in the magnetic separation portion becomes large if increasing an addition amount of the magnetic power, or it also becomes large if strengthening the magnetic field of that magnet. Accordingly, use of a magnet having strong magnetic field lessens the addition amount of the magnetic power to be added, thereby brining about an advantage of reducing the operation costs of purification, because of reduction of an amount of loading of the magnetic power. Thus, if constructing the magnet of the magnetic separation portion for the magnetic flocks with a magnet having very strong magnetic field, such as, a superconducting magnet, etc., for example, it is possible to lessen the addition amount of the magnetic body to be added to the raw water, for the magnetic flocks, but the magnet of strong magnetic field is expensive in manufacturing cost, and in particular, the manufacturing cost of the superconducting magnet, stronger in the magnetic field several tens times than that of a permanent magnet, is very expensive.

As was mentioned in the above, with the structures of the water filtration purifying apparatus according to the conventional art, there is a problem that the costs of the purifying apparatus comes to be high, in particular, when dealing with a large amount of the raw water under actual instillation thereof. Then, according to the present invention, by taking the problems within such the conventional art into the consideration thereof, an object thereof is to provided the structures of the water filtration purifying apparatus and a method for that, but without increasing the manufacturing costs of that apparatus, greatly, even in case of treating a large amount of raw water, and thereby reducing manufacturing costs and processing costs of that apparatus.

### MEANS FOR DISSOLVING THE PROBLEM(S)

For accomplishing the object mentioned above, according to the present invention, first of all, there is provided a filtration water purifying apparatus, comprising: a filtration means for filtering a fluid to be professed, which contain material to be removed; an exfoliating means for exfoliating the material to be removed, which is filtered by said filtration means, from said filtration means; and a separation/concentration means for introducing exfoliation fluid including the material to be removed, which is exfoliated by said exfoliating means, isolating from the fluid to be processed, and for separating the material to be removed, and thereby to concentrate.

Also, according to the present invention, for accomplishing the object mentioned above, there is provided filtration water purifying apparatus, comprising: a first filtration means for filtering material to be removed, for filtering a fluid to be processed, containing material to be removed therein; a first exfoliating means for exfoliating first material to be removed, which is filtered by said first filtration means, from said first filtration means; a second filtration means for introducing a first exfoliation fluid including the material to be removed, which is exfoliated by said first exfoliation means, and for filtering the material to be removed from said exfoliation fluid; a second exfoliation means for exfoliating the material to be removed, which is filtered by said second filtration means, from said second filtration means; and a separation/concentration means for separating the material to be removed, from said second exfoliation flow including the material to be removed therein, which is exfoliated by said second exfoliation means.

Further, according to the present invention, for accomplishing the object mentioned above, there is also provided a water filtration purifying method, comprising the following steps of: a filtration step for filtering a fluid to be processed, which contains material to be removed, by a filtration means; an exfoliating step for exfoliating the material to be removed, which is filtered in said filtration step, from said filtration means; and a separating/concentrating step for isolating an exfoliation fluid including the material to be removed therein, which is exfoliated in said exfoliating step, from said fluid to be processed, and for separating the material too be processed from the exfoliation fluid containing said material to be removed, and thereby concentrating, by a separation/concentration means.

Further, according to the present invention, the water filtration purifying apparatus and the method thereof, preferably, further comprises a pre-processing means for coagulating the material to be removed into flocks thereof, in front of said filtration means, or further comprises a pre-processing means for coagulating the material to be removed into flocks thereof, between said first filtration means and said second filtration means. Also, according to the present invention, within the water filtration purifying apparatus and the method thereof, a number of sets of apparatuses building up said separation/concentration means is smaller than that of apparatuses building up said filtration means. Further, it is also possible to comprise a discharge means for discharging the exfoliation fluid including said material to be removed into an outside of said filtration water purifying apparatus, provided in a downstream of said first filtration means or said second filtration means.

Thus, according to the present invention, for dissolving the problems mentioned above, a filter filtration portion (i.e. filtration means) and a magnetic separating portion (separating means) are provided, separately, and the exfoliation fluid including the material to be removed therein is isolated from the fluid to be processed, thereby to be separated and concentrated. With this structure, as is apparent form the following detailed explanation, a purified water is obtained by filtering magnetic flocks through a rotary filter, and also a water is collected, washing out the magnetic flocks from the rotary filter (i.e., exfoliation fluid), i.e., sludge water containing a large amount of magnetic flocks therein, to be introduced into a magnetic separator trough other pipe, whereby collecting the magnetic flocks, magnetically, at high density. With such the structure, since it is possible to collect the sludge from all sewages, which are generated within the respective filtration separators, by only one (1) set of the filtration separator (or a number of sets less than that of the filtration separators), even if there are provided a plural number of the filtration separators, and thereby enabling to dissolve the problem, i.e., an increase of costs of the apparatus as a whole.

Also, in case where the purifying apparatus is constructed with the filtration separator and the magnetic separator, by one (1) set thereof for each, since the magnet can be made short in the size, to achieve further small-size of the magnetic separator, therefore it is also possible to dissolve the dissolve the problem, i.e., an increase of costs of the apparatus as a whole, in the similar manner to the above mentioned.

### EFFECT(S) OF THE INVENTION

As apparent from the above, according to the present invention, within the water filtration purifying apparatus, aiming purification of water quality and solid/liquid separation, in particular, with the structure of the purifying apparatus, combining a filtration function and magnetic separation function, a practically superior effect can be obtained, i.e., providing a water filtration purifying apparatus and a method thereof, enabling to obtain a purified water of high quality and also reducing the manufacturing cost thereof.

### BRIEF DESCRIPTION OF DRAWINGS

Those and other objects, features and advantages of the present invention will become more readily apparent from the following detailed description when taken in conjunction with the accompanying drawings wherein:
Fig. 1 is a view for showing the entire structures of a water filtration purifying apparatus with using magnetic separation therein, according to an embodiment 1 of the present invention;
Fig. 2 is a cross-section view for showing the detailed structures of a magnetic separation portion in the water filtration purifying apparatus shown in Fig. 1 mentioned above;
Fig. 3 is a cress-section view cut along with A-A line shown in Fig. 2 mentioned above, also for showing the detailed structures of the magnetic separation portion;
Fig. 4 is a view for showing outline structures of the water filtration purifying apparatus and a flow of purifying processes thereof, according to the embodiment 1 of the present invention;
Fig. 5 is a cross-section view for showing the structures of a magnetic separator, in particular, according to an embodiment 2 of the present invention;
Fig. 6 is a cross-section view for showing the structures of a magnetic separator, in particular, but according to an embodiment 3 of the present invention;
Fig. 7 is an upper cross-section view in the structures of the magnetic separator shown in Fig. 6 mentioned above;
Fig. 8 is a view for showing a processing flow of a water purifying apparatus, according to an embodiment 4 of the present invention; and
Fig. 9 is also a view for showing a processing flow of other water purifying apparatus, according to the embodiment 4 of the present invention.

### BEST MODE FOR CARRYING OUT THE INVENTION

### [Embedment 1]

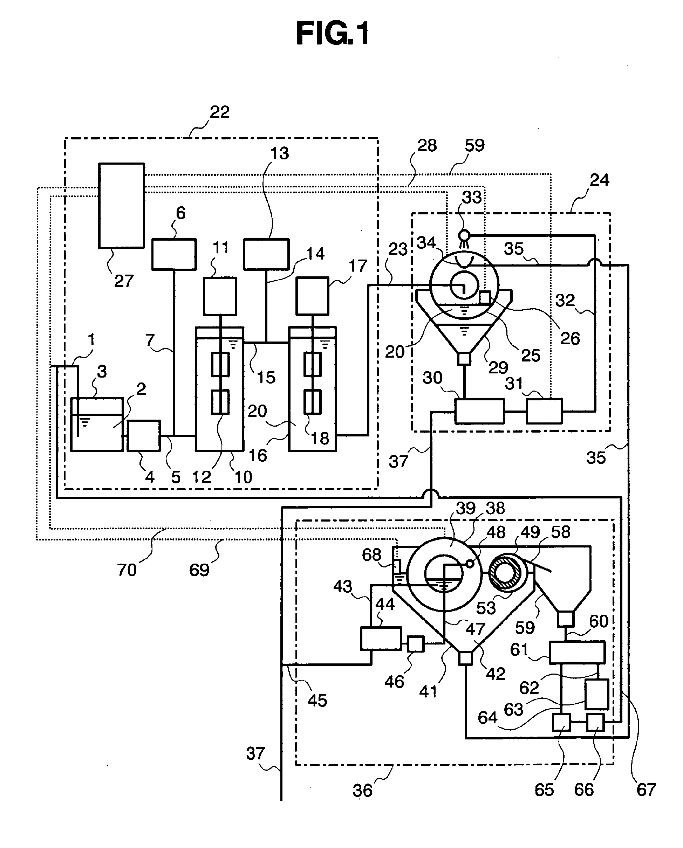

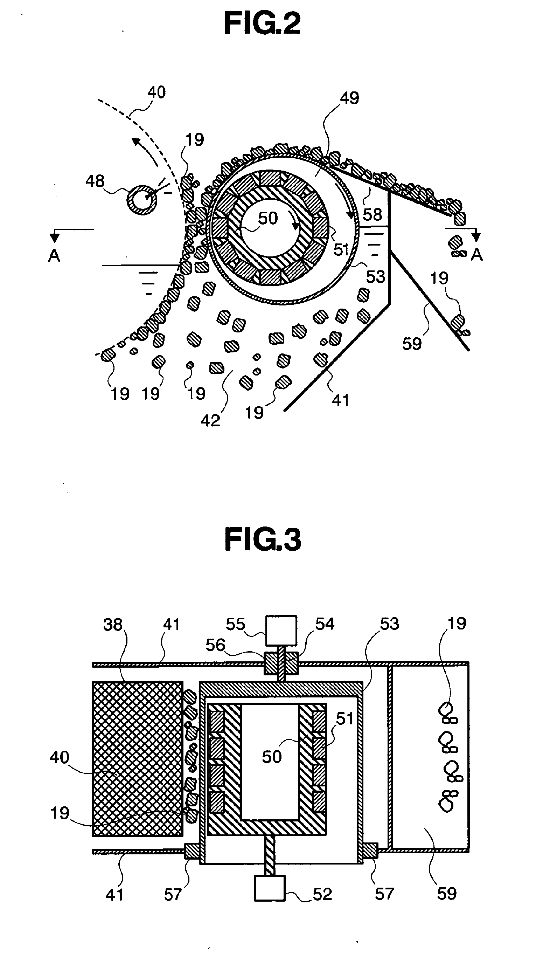

Hereinafter, explanation will be made on an embodiment of the present invention, by referring to Figs. 1, 2 and 3 attached herewith. However, Fig. 2 is an enlarged cross-section view of a magnetic separator 36 shown in Fig. 1, and Fig. 3 is a cress-section view cut along with A-A line shown in Fig. 2 mentioned above.

First of all, Fig. 1 shows the outlook structures of the entire of a water purifying apparatus, according to the present invention, and in the figure, raw water 2 supplied from a pipe 1 is reserved or stored within a raw water storage tank 3, herein, being removed large dusts of several millimeter therefrom. The raw water 2, containing fine material to be removed, such as, oil particles organic matters and microorganisms, for example, therein, is further sent to a pipe 5 at a predetermined flow rate by means of a pump 4. In this instance, from a seeding agent preparation device 6 are added magnetic power into the raw water, such as, triiron tetroxide or the like, and pH adjuster, and further water solution of a coagulant and/or a polymer reinforcing material, for supplying aluminum ions and iron ions, such as, poly aluminum chloride or iron chloride or ferric sulfate, etc., for example, within the pipe 5 mentioned above through a conduit 7, and they are guided into a stirring vessel 10. In this stirring vessel 10, the raw water is stirred or agitated at a high speed by means of stirring blades 12, which are rotationally driven by a motor 11, and thereby producing magnetic micro-flocks of several hundreds micrometer. Thereafter, the polymer reinforcing material or the like supplied from a polymer agent preparation device 13 is added into the raw water within the pipe 15 through a conduit 14, and within a stirring vessel 16, they are agitated or stirred, slowly, at a low speed by means of stirring blades 18, which are rotationally driven by a motor 17 thereof, and thereby producing a pre-process water 20 containing magnetic flocks 19 (not shown in Fig. 1) having size of several millimeter. However, the processes up to here are conducted within a pre-process machine 22, as a pre-process means.

Next, the pre-process water 20 produced through the processing steps mentioned above, with using the pre-process machine 22 mentioned above, is flushed into a filtration purifying apparatus 24 through a conduit 23.

Herein, the filtration purifying apparatus 24 mainly comprises a rotary filter 25 disposing a net (i.e., a filter) on an outer surface of a drum rotating, a liquid surface detector 26, provided within that rotary drum, an operation controller device 27 having a function of controlling the liquid surface, wiring 28 for transmitting a measurement signal from that liquid surface detector 26 to the operation controller device 27, a purified water tank 29 for storing the purified water therein, which filtered by that net, temporarily, a purifying tank 30 for storing the purified water therein, a pressure pump 31 for pressuring a part of the purified water, a cleaning nozzle 33 for injecting a part of the purified water pressurized onto the rotary filter 25 mentioned above, from an outside thereof, through a pipe 32, and a tub 34 for collecting sludge water flowing down due to that injection, i.e., the sludge coming off from the net (i.e., the filter) and falling down and the cleaning water injected (i.e., a sludge water or an exfoliating fluid). And, the sludge water collected within the tub 34 is moved due to the natural gravity, or pressurized by a pump, to be guided into the magnetic separator 36, which is further provided in a rear stage.

Thus, within the filtration purifying apparatus 24 mentioned above, first of all, the purified water (i.e., the pre-process water 20 within the stirring vessel 16 of the pre-processing machine 22 mentioned above) flows into an inside of the rotary filter 25 through the pipe 23. In this rotary filter 25, the purified water mixing the magnetic flocks therein is percolated by means of the filter, and thereby removing the magnetic flocks within the purified water therefrom. This purified water filtrated accumulates within a water tank 29, and it is stored in the purified water tank. Thereafter, it is discharged into an outside of the system, passing through the pipe 37.

On the other hand, when the magnetic flocks accumulate on the net (or filter) surface on a bottom of the rotary filter 25 mentioned above, water conducting or permeating resistance on that net (or filter) surface increases, and a liquid surface within the rotary drum comes to be higher than the liquid surface of the pre-process water 20. Then, detection is made on the increase of the liquid surface of this pre-process water 20, through the measurement signal supplied from the liquid surface detector 26 mentioned above. Thus, when determining that it exceeds a predetermined water level, then the operation controller device 27 drives a motor (not shown in the figure) of the rotary filter 25, and further initiates the pump 31. With doing this, the purified water is drained from the nozzle 33, and then the magnetic flocks accumulating on the net (or filter) surface of the rotary filter 25 washed down, and the sludge water is collected within the tub 34. Thus, rotary filter 25 is washed out, to be recycled, and this operation will be repeated.

As was mentioned above, when the rotary filter 25 is washed and recycled, then the water permeating resistance of the rotary filter 25 becomes small, and as a result, the liquid surface of the pre-process water within the rotary drum falls down. Then, the operation controller device 27 stops rotation of the rotary filter 25 with a control signal thereof, when the liquid surface comes down lower than the predetermined water level, upon basis the measurement signal from the liquid surface detector 26.

Following to the above, explanation will be made on the structures of the magnetic separator 36, by referring to Figs. 1 to 3. Fig. 3 shows the cross-section view cut along the A-A line shown in Fig. 2, and on outer peripheral surface of the rotary drum 38 is provided a filtration filter, being made of a fine line of stainless steel or copper, or a polyester fiber, etc., and having the mesh size from several micrometers to several tens micrometers, as the net (or filter) 40 thereof, and further has an opening portion 39.

And, as is shown in Fig. 2, the sludge water flowing into the water tank 41 further runs into the drum 38 passing through the net (or filter) 40. In this instance, the magnetic flocks within the sludge water 42 are captured or caught on an inter surface of the net 40 (or the filter) mentioned above, while the water passing through the net 40 (or the filter) and being separated from the magnetic flocks 19 is discharged from the opening portion 39, to be the purified water. However, herein, power for the sludge water 42 to pass through the net (or the filter) 40 is in the difference in the liquid levels, i.e., between the sludge water 42 and the purified water within the drum 38. Also, the purified water discharged from this opening portion 39, as shown in Fig. 1, passing through the pipe 43, accumulates within the purified water tank 44, and further, passing through the pipe 45, it joins into the pipe 37, thereby being discharged into the outside of the system. On the other hand, the magnetic flocks 19 are filtered (or separated) upon an outer surface of the net (or the filter) 40 rotating into the anticlockwise direction, to adhere thereon, and appear or expose into the atmospheric portion above the liquid surface, in the form of a deposit.

The magnetic flocks 19 filtered (or separated) on the outer surface of the rotating net (or the filter) 40 are separated and collected in the following manner. Thus, in Fig. 1, the purified water within the purified water tank 44 is pressurized by a pump 46, and this purifiedwater pressurized is transferred into a shower tube 48 from a conduit 47, thereby blasting showered water from that holes, directing from the front surface of the net 40 to an outside surface thereof. With this, as is shown in Fig. 2, the magnetic flocks 19 accumulating on the outer surface of the net 40 come off or exfoliate from, by the shower water, and the net 40 surface is recycled, again. On the other hand, the magnetic flocks washed down stay on the water surface of the sludge water 42.

Herein, a revolving-type magnet 49 applied as a means for generating magnetic field, to be used in magnetic separation, is built up by fixing permanent magnets 51 into plural strips of gutters formed on the outer surface of a rotary body 50, which is made of a non-magnetic material, and on an outer surface of the rotating body 50, through adhesive or the like. This rotary body 50 has such a structure that a motor 52 rotates it under the control of the rotation speed thereof, for example.

On the other hand, a rotary body 53 to be used for transferring the magnetic flocks 19, which are magnetically separated from, is made of a non-magnetic material, and a motor 55 rotates this rotary body 53 for use of sludge transfer through a shaft 54 (see Fig. 3), under the control of the rotation speed thereof. As is apparent from the figure, at an end portion thereof, the shaft 54 is supported on a wall of the water tank 41, by means of a rotary supporting body 56 having watertightness, while at the other end portion, an outer peripheral portion of the rotary body 53 on the wall of the water tank 41 through a rotary supporting body 57 having watertightness. Further, an inside of the rotary body 53 is opened to the atmosphere.

The magnet 49 mentioned above is inserted into an inside of the rotary body 53, from the surface thereof, which is opened to the atmosphere, and this magnet 49 is disposed at a position where the exfoliated magnetic flocks 19 stay, which are washed down by the cleaning water, i.e., being close to the position on the side of the rotary drum 40. Herein, according to the present embodiment, an axis of the rotary body 53 and an axis of the rotary body 50 are disposed shifting from each other. Not shown in the figure, the magnet 49 is fixed on a part of the water tank 41 by a bolt or the like, so that it is located at a predetermined position.

Also, the rotation directions of the rotary body 53 for use of sludge transfer and the rotary body 50 having the permanent magnets 51 mentioned above thereon are set into the same direction, and with this, the magnetic flocks 19 drawn or attracted due to the magnetism rotate into the direction of moving to the side of atmosphere. However, preferably, the rotation speeds of both are same to each other, but they may be different from each other. In the case of the present embodiment, the rotation speed of the rotary body 50 on the magnet side is larger than the rotation speed of the rotary body 53. Thus, it is set to be faster in the rotation speed.

Further, in Fig. 2, the magnetic flocks 19 staying in the vicinity of the water surface, after being washed down and exfoliated, move to the magnet side, being drawn by the magnetic field of the magnet 49 mentioned above, and adhere on the outer surface of the rotary body 53 rotating around outside that magnet 49. Thereafter, accompanying with rotation of the rotary body 53, they expose into the atmosphere. However, within the atmosphere, excessive water within the magnetic flocks 19 flows down on the surface of the rotary body 53 due to the gravity, and with this, the magnetic flocks 19 are further concentrated or enriched. But, in the present example, the percentage of water content of the magnetic flocks 19 is lowered down to 97%, at this stage, i.e., it is the sludge of high density.

The magnetic flocks 19 concentrated on the surface of the rotary body 53, in the manner as was mentioned above, are further moved, due to the rotation of the rotary body 53 for use of sludge transfer mentioned above. In this instance, since the axis of the rotary body 53 and the axis of the rotary body 50 are disposed shifting from each other, the magnetic flocks is separated, gradually, from the magnet 49, and with this, the magnetic force attracting thereon is reduced, abruptly, as they apart from the magnet. With this, the magnetic flocks 19 are exfoliated from the surface of the rotary body 53 by means of a spatula 58, which is supported on the water tank in a part thereof, and they fall down into a sludge collect tank 59 due to the gravity, to be separated/captured as the sludge.

The magnetic flocks 19, being separated/captured from the raw water and discharged from, in this manner, are guided into a hydro-extractor 61, such as, a centrifugal separator or a belt press, etc., for example, through the pipe 60 shown in Fig. 1, wherein they are concentrated to be equal or less than 85%, approximately, in the percentage of water content, so that water does not leak out from the sludge, or equal or less than 75%, for obtaining activation of microorganisms disintegrating organic matters when being used as the compost. The sludge concentrated, in this manner, to be high in the density, is further accumulated or stored in a sludge tank 63 through a pipe 62. Thereafter, this sludge accumulated is transported a place for disposal or a place for burning thereof, or to a field for processing the compost.

Also, the process sewage dehydrated in the hydro-extractor 61 mentioned above enters into a process sewage tank 65 through a pipe 64, and after being pressurized by a pump 66 herein, it joins into the raw water supplied within the pipe 1, passing through a pipe 67, to be turned back to the raw water tank 3, and it is introduced into the pre-process steps, again.

On the other hand, within the magnetic separator 36, a sensor 68 detects the liquid surface of the sludge water 42 within the water tank 41, and that information is transmitted to the operation controller device 27 through a signal line 69. Then, upon basis of that information, the operation controller device 27 calculates out the most suitable rotation speed of the rotation drum 48 and an appropriate speed for collecting the magnetic sludge 19, so that the position of liquid surface of the pre-process water does not rise up, i.e., not overflowing from the water tank 41, with an aid of a program for calculating the most suitable amount, and that signal is transmitted to the rotary motor (not shown in the figure) of the rotary drum and the motor 55 for use of driving the rotary body through signal lines 70; thereby controlling them at the most suitable speeds.

However, as is apparent from the explanation mentioned above, the material to be removed is filtered from the fluid to be processed (i.e., the raw water), and the filtrated material to be removed is exfoliated from, with using a part of the fluid to be processed (i.e., the raw water), however in that instance, the fluid containing the exfoliated material to be removed (i.e., an exfoliation fluid) therein, is isolated from a processing route of that fluid to be processed (i.e., the rawwater), and is introduced into the magnetic separator, as a separating/concentrating means for separating and concentrating the material to be removed. With this, the magnetic separator can process only the fluid (i.e., the exfoliated fluid) containing the exfoliated material to be removed therein. For this reason, it is possible to deal with, fully or sufficiently, even in case where a capacity is large for processing the fluid to be processed within the processing apparatus located at the preceding stage. And, with this magnetic separator, the material to be removed is collected in the form of the magnetic flocks, i.e., being separated/collected as the sludge, and thereafter, they are transported the place for disposal or the place for burning thereof, or to the field for processing the compost.

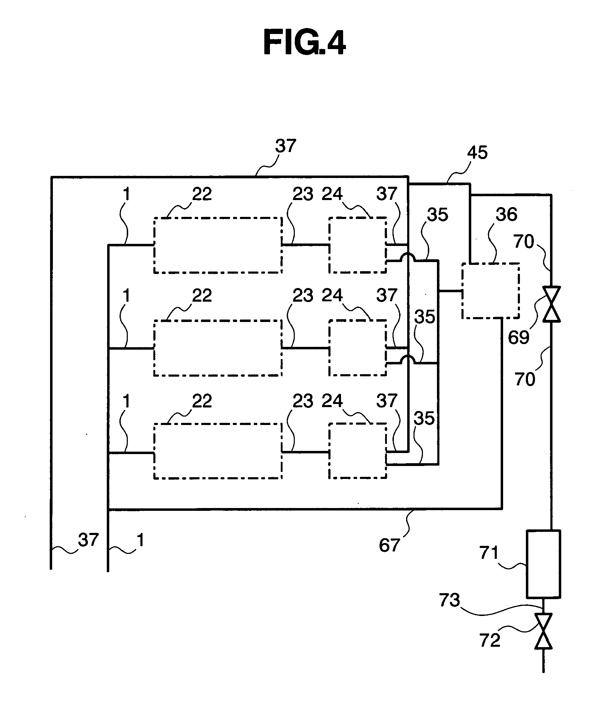

In the embodiment explained in the above, the explanation was made on the case where the pre-processing machine 22 and the filtration separator 24 are same in the number thereof (1:1), but next, Fig. 4 shows processing flow within a purifying apparatus for purifying a large amount or volume of raw water, according to a variation thereof, being constructed by combining three (3) sets of the pre-processing machines 22 and the filtration separators 24, and one (1) set of the magnetic separator 36. Thus, the purified water that is purified by the three (3) sets of the pre-processing machines 22 and the three (3) sets of the filtration separator 24, is joined into the flow by means of the pipe 37, and thereby being discharged outside the system. On the other hand, the sludge water discharged from each of the filtration separators 24 is collected by the pipe 35, thereafter, and is introduced into the magnetic separator 36.

And, herein, the sludge of magnetic flocks is collected and removed by one (1) set of the magnetic separator 36, and the process sewage produced when dehydration is conducted thereon joins into the flow within the pipe 37 passing through the pipe 45, and thereby being discharged outside the system. On the other hand, as was mentioned above, thereafter, the process sewage, which is dehydrated within the hydro-extractor or the like, joins into the raw water supplied within pipe 1, thereby being turned back into the raw water tank 3, and is introduced in the pre-process steps (i.e., the pre-processing machine 22), again.

As was apparent from the above explanation, in accordance with this variation, it is possible to collect all of the sludge water generated in the plural number of filtration separators 24 by one (1) set of the magnetic separator 36, and thereby enabling to reduce the costs of the entire purifying apparatus.

Also, in accordance with this variation, further providing a pipe 70 divided from the above-mentioned pipe 35 through a valve 69, it is possible to guide the sludge water discharged from each filtration separator 24, from that pipe 70 to the sludge water tank 71, thereby reserving it therein. However, such circuit is a way of operation when the magnetic separation cannot be done, in particular, in case where the magnetic powder is in the shortage. However, the sewage reserved in this sludge water tank 71 is collected into a sewage treatment plant on a land by means of the pipe 73 through the valve 72, or may be discharged into the sea, since contents of the sludge is the organic matter or the microorganism.

### [Embodiment 2]

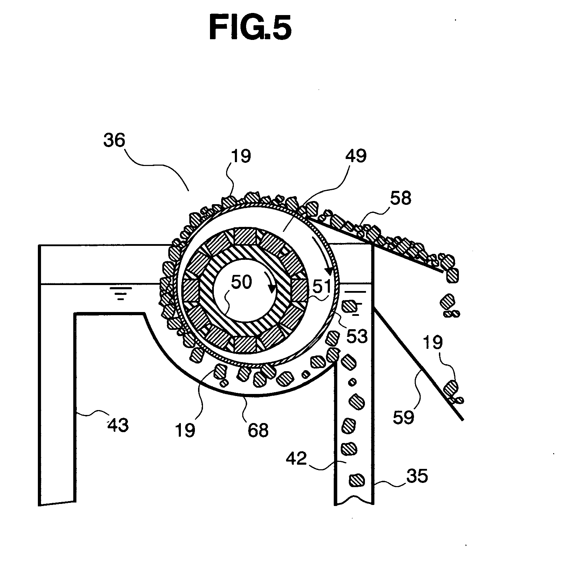

Fig. 5 shows other embodiment (an embodiment 2), according to the present invention. An aspect of the present embodiment differing from the embodiment mentioned above lies in, especially, apparent from comparison to Fig. 2 mentioned above, that the sludge water 42 is introduced into the magnetic separator 36 through the pipe 35, and a continuing fluid channel or path is disposed along the rotary body 53 for use of transfer of the sludge, thereby letting the processed water purified flow into the pipe 43. However, the processed water passing through this pipe 43 is accumulated within the purified water tank 44 shown in Fig. 1 mentioned above, and after passing through the pipe 45, it joins into the flow in the pipe 37, and thereby being discharged outside the system.

On the other hand, in this embodiment 2, the sludge water 42 flowing into the magnetic separator 36 through the pipe 35, in particular, the magnetic flocks 19 thereof are attracted due to the magnetic force of the permanent magnets 51, thereby adhering on the outer surface of the rotary body 53 due to the magnetic force. And, the magnetic flocks 19 adhering on the surface of this rotary body 53 are moved into the atmosphere because of rotation of the rotary body 53. In this instance, similar to that mentioned above, since the axis of the rotary body 53 and the axis of the rotary body 50 are disposed, shifting from each other, the flocks gradually move away from the magnet 49, and accompanying with this, the attracting force of magnetism thereon is reduce, abruptly, as they apart from the magnet. And, the magnetic flocks 19 are exfoliated from the surface of the rotary body 53 by the spatula 58, and they fall into the sludge collect tank 59 because of the gravity, to be separated/collected as the sludge. On the other hand, the processed water purified is discharged outside the system, passing through the pipe 43.

Further, in accordance with this embodiment 2, in particular, comparing to the structures shown in Fig. 2 mentioned above, there is no necessity of providing the rotary filter, therefore the costs of the purifying apparatus can be reduced, further more.

### [Embodiment 3]

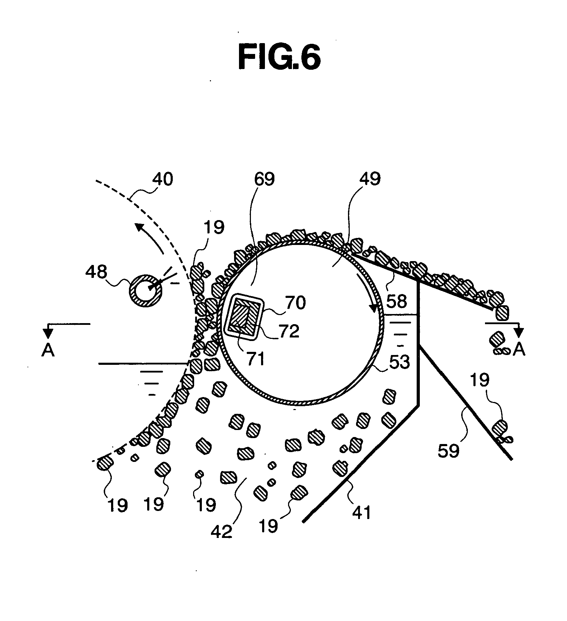

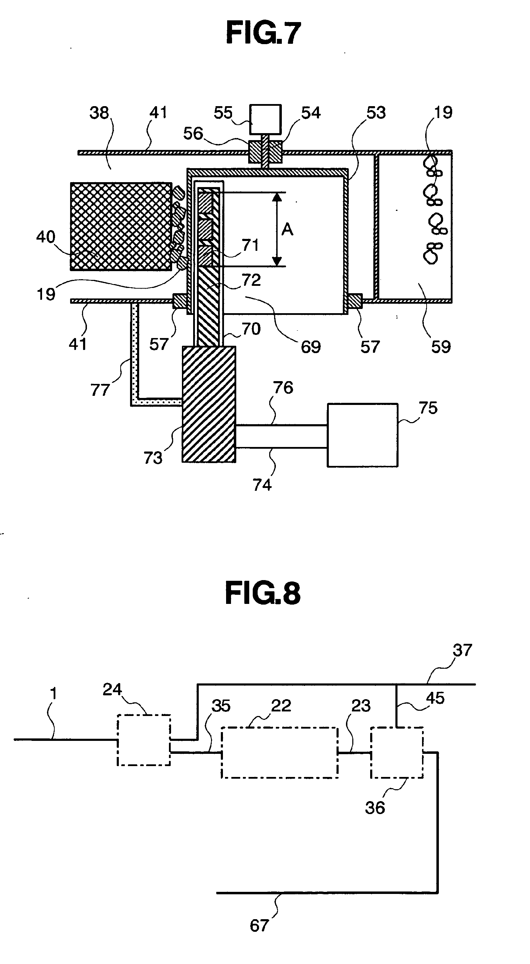

Figs. 6 and 7 show further other embodiment (an embodiment 3), according to the present invention. An aspect of the present embodiment differing from the first embodiment mentioned above, especially, in comparison with that shown in Fig. 2 mentioned above, the magnet 69 is made of superconducting bulk magnet, thereby shortening the length "A" between the end portions of the magnets. However, the magnet 69 of superconductivity is constructed with a vacuum container 70 for heat insulating, a heat transfer body 72 building superconducting bulks 71 therein, a freezing machine 73 for cooling an end portion of the heat transfer body 72, a compressor 75 for supplying a helium gas of high pressure to the freezing machine 73 via the pipe 74, and pipe 76 for collecting a gas of middle pressure after adiabatic expansion within the freezing machine 73 into the compressor. Also, this magnet 69 is fixedly supported by a supporting member 77, which is fixed on the water tank 41.

However, in those figures, the superconducting bulks 71 are already magnetized by external magnets, and are shown under the condition that on the surface of the superconducting bulks 71, which are cooled down at low temperature by the freezing machine, are magnetic fields, as several tens times strong as permanent magnets. Also, the superconducting bulk 71 is composed of copper oxide of yttrium group, for example, and is cooled down, by the heat transfer body 72, as well as, the freezing machine 73, to be equal or less than 60K of temperature thereof; thereby, cooling the superconducting bulk 71 at low temperature and maintaining the condition of superconductivity. In this manner, constructing the magnet with the superconducting magnet, since it is possible to generate the magnetic filed, as several tens times strong as the permanent magnet, therefore the magnetic attracting force is increased, and thereby increasing an amount of collection of the magnetic flocks per an hour.

Accordingly, with the present invention, since it is possible to keep the amount of collection per an hour equal to that, which can be obtained in the case of the permanent magnet, if shrinking an area where the magnet generates the magnetic field, the length "A" of the magnet can be shorten, comparing to that in the case of the permanent magnet, and thereby achieving a further small-sized magnetic separator.

### [Embodiment 4]

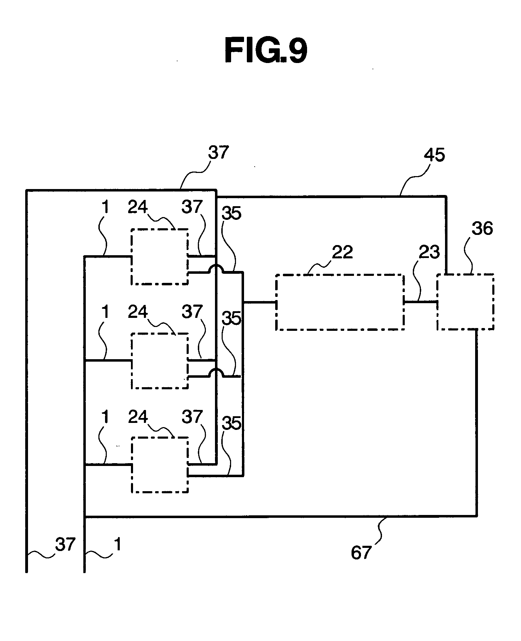

Next, further other embodiment (an embodiment 4) according to the present invention will be shown, by referring to Figs. 8 and 9. However, Fig. 8 is a view for showing a processing flow within the water purifying apparatus, according to the embodiment 4. In the present embodiment, the raw water is introduced into the filtration separator 24, directly, passing through the pipe 1. Thereafter, the purified water after removing the material to be removed in this filtration separator 24 is discharged, passing through the pipe 37, outside the system.

On the other hand, the sludge water produced when cleaning the filter of the filtration separator 24, i.e., containing the contaminants or pollutants separated, is introduced into the pre-processing machine 22, passing through the pipe 35. In the pre-processing machine 22, in the similar manner to that of the pre-processing machine 22 in the embodiment shown in Fig. 1 mentioned above, the pre-process water containing the magnetic flocks 19 therein (but, not shown in Fig. 8) is produced by conducting injection of agents and/or stirring process, etc. This pre-process water is, thereafter, introduced into the magnetic separator 36, passing through the pipe 23. In the magnetic separator 36, in the similarmanner to that of the magnetic separator 36 in the embodiment shown in Fig. 1 mentioned above, the magnetic flocks 19 are separated due to the magnetism, and the processed water, passing through the pipe 45, joins into the flow within the pipe 37, and is discharged outside the system. Also, it is same to the above, that the magnetic flocks 19 magnetically separated are collected through the sludge processing as the sludge, and the process sewage produced in this sludge processing joins into the flow in the pipe 1, passing through the pipe 67, and is treated with purifying process, again.

However, in this embodiment 4, since the raw water is introduced into the filtration separator 24 as it is, without conducting the pre-process mentioned above, then there is necessity of selecting the aperture or mesh size of the filter, which is provided in that filtration separator 24, appropriately, to be suitable in the size depending on the size of the material to be separated, which are contained in the raw water. Accordingly, in general, as the filter of this filtration separator 24 may be used a filter, having mesh size finer than that of the filter of the magnetic separator 36 mentioned above.

As was mentioned above, with this embodiment 4, since it is enough to process only the sludge water containing the pollutants therein, which are separated and produced when cleaning the filter of the filtration separator 24, within the pre-processing machine 22, it is possible to achieve reduction of the manufacturing costs of the entire apparatus, as well as, small-sizing of that pre-processing machine 22.

Further, Fig. 9 shows the processing flow in the purifying apparatus for purifying a large amount or volume of raw water, which is constructed by combining one (1) set of the pre-processing machine 22, as well as, three (3) sets of the filtration separators 24 mentioned above, and further one (1) set of the magnetic separator 36. Thus, with such the structures, the purified water, which is purified in the three (3) sets of the filtration separators 24 is joined into the flow by the pipe 37, and is discharged outside the system. On the other hand, sludge waters discharged from each of those three (3) sets of the filtration separators 24, respectively, are collected into the pipe 35, and introduced in the magnetic separator 36 through the pre-processing machine 22. However, in this example, the sludge of the magnetic flocks is collected and removed through the magnetic separation, and the process water, which is produced when conducting dehydration thereof, being joined into the flow in the pipe 1 passing through the pipe 67, turns back to the filtration separator 24, and is introduced into the steps of the purifying process, again.

As apparent from the explanation made in the above, in accordance with this embodiment 4, since all the sludge water generated in the plural number (i.e., three (3) sets, in the present example) of the filtration separators 24 can be collected by only one (1) set of the pre-processing machine and one (1) set of magnetic separator, it is possible to reduce the cost of the water filtration purifying apparatus as a whole.

However, in the embodiment mentioned above, the explanation was made on the case where the filtration separator 24 applies the rotary filter 25, in particular, having a drum-type filter. However, the present invention should not be restricted only to that, but this filtration separator 24 may apply a filter of other type, for example, a membrane filter of using a hollow membrane or the like, or ceramic filter, a sand filtration filer of using a particle filter material, etc.

Also, in the embodiment mentioned above, explanation was made on the case, in particular, where the net (or the filter) 40 is shaped to be drum-like, but it is apparent that similar effect to that mentioned above can be also obtained by a filter, by changing the net (or the filter) 40 into a disc-like shape and disposing a plural pieces of this disc in the vertical direction.

Also, in the embodiment mentioned above, in particular, in the embodiment 3 shown in Fig. 6 and 7 mentioned above, as the freezing machine 73 thereof may be adopted various type of freeing machines, for example, Gifford/McMahon type, pulse tube type, Solvay type, Bell Mayer type, Claude type, and an electronic type freezing machine are applicable.

In addition thereto, in be embodiment mentioned above, mentioning was made on the apparatus combining the filtration function and the separation/concentration function; however, the present invention should not be restricted to this, and it is also possible to apply a separating means having a flock concentrating function, for example, so called a bubble floating separating machine, i.e., supplying fine bubbles into water to adhere them onto flocks within the water, thereby floating the flocks upon the water surface, and then separating and removing them by a scum, or so called a centrifugal separating machine, i.e., separating and removing the flocks, the specific gravity of which is larger than that of the seawater by means of a hydro-cyclone.

## Claims

1. A filtration water purifying apparatus, comprising:
a filtration means for filtering a fluid to be professed, which contain material to be removed;
an exfoliating means for exfoliating the material to be removed, which is filtered by said filtration means, from said filtration means; and
a separation/concentration means for introducing exfoliation fluid including the material to be removed, which is exfoliated by said exfoliating means, isolating from the fluid to be processed, and for separating the material to be removed, and thereby to concentrate.

2. The filtration water purifying apparatus, as described in said claim 1, further comprising a pre-processing means for coagulating the material to be removed into flocks thereof, in front of said filtration means.

3. The filtration water purifying apparatus, as described in said claim 1, wherein a number of sets of apparatuses building up said separation/concentration means is smaller than that of apparatuses building up said filtration means.

4. The filtration water purifying apparatus, as described in said claim 1, further comprising a discharge means for discharging the exfoliation fluid including said material to be removed into an outside of said filtration water purifying apparatus, provided in a downstream of said filtration means.

5. A filtration water purifying apparatus, comprising:
a first filtrationmeans for filteringmaterial to be removed, for filtering a fluid to be processed, containing material to be removed therein;
a first exfoliating means for exfoliating first material to be removed, which is filtered by said first filtration means, from said first filtration means;
a second filtration means for introducing a first exfoliation fluid including the material to be removed, which is exfoliated by said first exfoliation means, and for filtering the material to be removed from said exfoliation fluid;
a second exfoliation means for exfoliating the material to be removed, which is filtered by said second filtration means, from said second filtration means; and
a separation/concentration means for separating the material to be removed, from said second exfoliation flow including the material to be removed therein, which is exfoliated by said second exfoliation means.

6. The filtration water purifying apparatus, as described in said claim 5, further comprising a pre-processing means for coagulating the material to be removed into flocks thereof, between said first filtration means and said second filtration means.

7. The filtration water purifying apparatus, as described in said claim 5, wherein a number of sets of apparatuses building up said separation/concentration means is less than that of apparatuses building up said first filtration means or said second filtration means.

8. The filtration water purifying apparatus, as described in said claim 5, further comprising a discharge means for discharging the exfoliation fluid including said material to be removed into an outside of said filtration water purifying apparatus, provided in a downstream of said first filtration means or said second filtration means.

9. A water filtration purifying method, comprising the following steps of:
a filtration step for filtering a fluid to be processed, which contains material to be removed, by a filtration means;
an exfoliating step for exfoliating the material to be removed, which is filtered in said filtration step, from said filtration means; and
a separating/concentrating step for isolating an exfoliation fluid including the material to be removed therein, which is exfoliated in said exfoliating step, from said fluid to be processed, and for separating the material too be processed from the exfoliation fluid containing said material to be removed, and thereby concentrating, by a separation/concentration means.

10. The water filtration purifying method, as described in the claim 9, further comprising a step for discharging the exfoliation fluid containing the material to be removed into an outside of a water filtration purifying apparatus.
